# EUROPEAN PATENT APPLICATION

(11) **EP 2 624 433 A1**
(43) Date of publication of application: **07.08.2013**
(21) Application number: 12153799.7
(22) Date of filing: 03.02.2012
(51) Int. Cl.: H02M 7/5387, H02M 1/12

(54) **Non-isolated PV inverter system with ground current mitigation**

(71) Applicant: ABB Research Ltd., 8050 Zürich (CH)
(72) Inventor: Pettersson, Sami, 00380 Helsinki (FI); Ho, Ngai-Man, 00380 Helsinki (FI); Escobar, Gerardo, 00380 Helsinki (FI)
(74) Representative: Parta, Ari Petri

(57) **Abstract**

A converter assembly comprising DC-DC converter means (4), inverter means (6), a DC link (5), input capacitor means (2), inductor means (7) and a neutral conductor (8), the DC-DC converter means (4) including at least one DC-DC converter unit (41, 42), the input capacitor means (2) including an input capacitor unit for each of the at least one DC-DC converter unit (41, 42), each of the input capacitor units having a midpoint (21, 22), the neutral conductor (8) being connected to a neutral point (85) on output side of the inverter means (6), and the inductor means (7) comprising an inverter side inductor (Lᵢₙᵥ) between each output terminal of the inverter means (6) and the neutral point (85) on output side of the inverter means (6). The neutral conductor (8) is connected to the midpoint (21, 22) of each of the input capacitor units.

## Description

### A CONVERTER ASSEMBLY AND A POWER PLANT COMPRISING THE CONVERTER ASSEMBLY

### FIELD OF THE INVENTION

The present invention relates to a converter assembly according to preamble of claim 1, and more particularly to avoiding ground leakage currents in the converter assembly.

High-frequency common mode voltages are the main source of ground leakage currents. Problems caused by ground leakage currents are well known in the art.

### BRIEF DESCRIPTION OF THE INVENTION

An object of the present invention is to provide a converter assembly capable of effectively attenuating high-frequency common mode currents, and a power plant utilizing the converter assembly. The objects of the invention are achieved by a converter assembly and a power plant which are characterized by what is stated in the independent claims. The preferred embodiments of the invention are disclosed in the dependent claims.

The invention is based on the idea of connecting the neutral conductor to the midpoint of each of the input capacitor units while the neutral conductor is galvanically separated from the input midpoint of the at least one DC-DC converter unit. Thus, the common mode current filtering is combined into one circuit, which means that the common mode current circulates through the whole system.

An advantage of the converter assembly of the invention is that also the inverter side inductors located between output terminals of the inverter means and the neutral point on output side of the inverter means contribute to the filtering of the common mode current generated by the DC-DC converter means. In addition, shutdown or bypassing of DC-DC converter unit(s) of the DC-DC converter means does not affect the attenuation of high-frequency common mode currents.

### BRIEF DESCRIPTION OF THE DRAWINGS

In the following the invention will be described in greater detail by means of preferred embodiments with reference to the attached drawings, in which
Figure 1 shows a power plant comprising a converter assembly according to an embodiment of the invention;
Figure 2 shows a power plant comprising a converter assembly according to another embodiment of the invention; and
Figure 3 shows more closely the structure of DC-DC converter means and inverter means of the power plant of Figure 2.

### DETAILED DESCRIPTION OF THE INVENTION

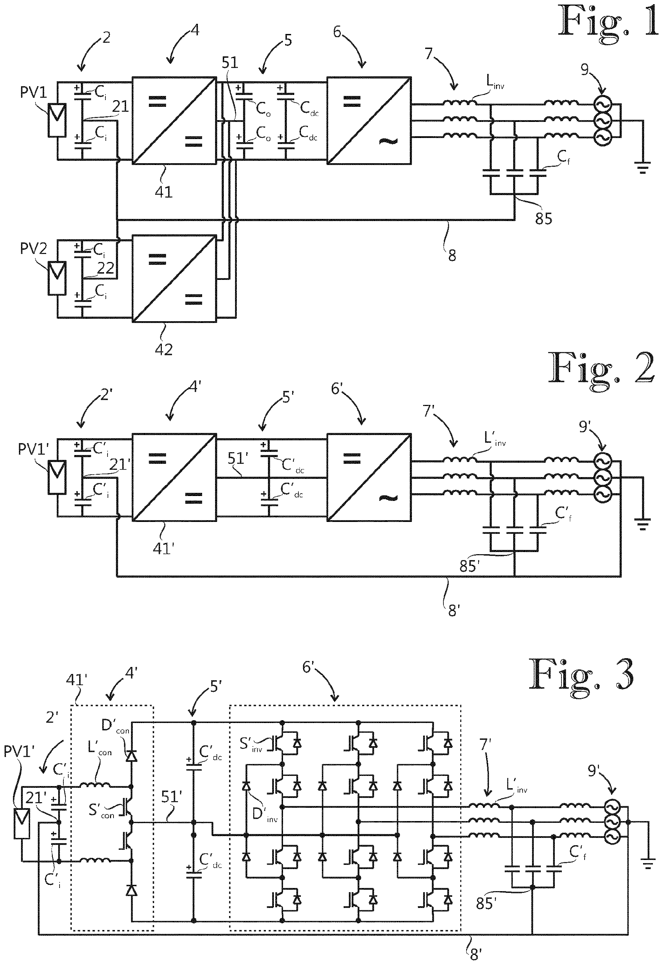

Figure 1 shows a power plant comprising power supply means for generating DC current and a converter assembly according to an embodiment of the invention.

The converter assembly of Figure 1 is a transformerless converter assembly, or a non-isolated converter assembly. The converter assembly comprises DC-DC converter means 4, inverter means 6, a DC link 5, input capacitor means 2, inductor means 7 and a neutral conductor 8.

The DC-DC converter means 4 include parallel connected DC-DC converter units 41 and 42. Both the DC-DC converter unit 41 and the DC-DC converter unit 42 have a symmetrical structure in respect of a midpoint thereof.

The DC link 5 connects electrically outputs of the DC-DC converter units 41 and 42 to an input of the inverter means 6. The input capacitor means 2 include an input capacitor unit for each of the DC-DC converter units 41 and 42. Each of the input capacitor units is connected between input terminals of corresponding DC-DC converter unit and has a midpoint. A midpoint of the input capacitor unit corresponding to the DC-DC converter unit 41 is denoted with reference numeral 21, and a midpoint of the input capacitor unit corresponding to the DC-DC converter unit 42 is denoted with reference numeral 22.

A capacitance between a midpoint of an input capacitor unit and a positive input terminal of corresponding DC-DC converter unit is substantially equal to a capacitance between the midpoint of the input capacitor unit and a negative input terminal of the corresponding DC-DC converter unit. For example, a capacitance Cᵢ between the midpoint 21 and a positive input terminal of DC-DC converter unit 41 is equal to a capacitance Cᵢ between the midpoint 21 and a negative input terminal of DC-DC converter unit 41.

The neutral conductor 8 is connected to a neutral point 85 on output side of the inverter means 6 and to the midpoint of each of the input capacitor units. There is a neutral point filter capacitor C_{f} between each output terminal of the inverter means 6 and the neutral point 85 on output side of the inverter means 6.

The inductor means 7 comprise an inverter side inductor Lᵢₙᵥ between each output terminal of the inverter means 6 and the neutral point 85 on output side of the inverter means 6. Each of the inverter side inductors Lᵢₙᵥ is connected in series with a load of the inverter means 6, the load comprising a grid 9.

The DC link 5 comprises a filter capacitor unit and an energy storage unit. The filter capacitor unit comprises two filter capacitors Cₒ connected in series between a positive bus bar of the DC link 5 and a negative bus bar of the DC link 5. A midpoint of the filter capacitor unit is connected to an output midpoint of each of the DC-DC converter units 41 and 42 with a midpoint conductor 51. The energy storage unit comprises two energy storage capacitors C_{dc} connected in series between a positive bus bar of the DC link 5 and a negative bus bar of the DC link 5.

Each of the DC-DC converter units 41 and 42 is capable of stepping up direct voltage. The DC-DC converter units 41 and 42 may comprise boost converters. In another embodiment the DC-DC converter units are also capable of stepping down direct voltage.

A modulation sequence of the inverter means 6 is synchronized with a modulation sequence of each of the DC-DC converter units 41 and 42. Due to the synchronization the modulation period starts and ends at the same time for the inverter means 6 and DC-DC converter units 41 and 42. The synchronization results in a natural current ripple cancellation in the neutral conductor 8.

The power supply means comprise a power supply unit for each DC-DC converter unit. Each power supply unit has supply terminals and is adapted to generate a direct current and to feed the direct current out of the power supply unit via the supply terminals. The supply terminals of each power supply unit are connected to input terminals of corresponding DC-DC converter unit.

The power plant of Figure 1 is a solar power plant. Each power supply unit comprises a photovoltaic cell unit adapted to convert solar energy into direct current. Supply terminals of photovoltaic cell unit PV1 are connected to input terminals of the DC-DC converter unit 41. Supply terminals of photovoltaic cell unit PV2 are connected to input terminals of the DC-DC converter unit 42.

Figure 2 shows a power plant comprising a converter assembly according to another embodiment of the invention. The converter assembly comprises DC-DC converter means 4', inverter means 6', a DC link 5', input capacitor means 2', inductor means 7' and a neutral conductor 8'. The DC-DC converter means 4' include a DC-DC converter unit 41' having a symmetrical structure in respect of a midpoint thereof.

The main difference between the power plant of Figure 2 and the power plant of Figure 1 is that the power plant of Figure 2 comprises only one photovoltaic cell unit, denoted as PV1', and only one DC-DC converter unit 41'. Also, a neutral point 85' on output side of inverter means 6' is grounded while the neutral point 85 on output side of the inverter means 6 includes only so-called virtual ground without a galvanic connection to the grid, the virtual ground enabling a better utilization of the DC link voltage. Further differences can be found in DC link 5'.

The DC link 5' connects electrically output of the DC-DC converter unit 41' to an input of the inverter means 6'. The DC link 5' comprises an energy storage unit but no separate filter capacitor unit. The energy storage unit comprises two energy storage capacitors C'_{dc} connected in series between a positive bus bar of the DC link 5' and a negative bus bar of the DC link 5'. A midpoint conductor 51' connects an output midpoint of the DC-DC converter unit 41' with a midpoint of the energy storage unit and an input midpoint of the inverter means 6'.

The DC-DC converter means 4' comprise a three-level boost converter, which is also known as mirrored or symmetric boost converter. The inverter means 6' comprise a three-phase three-level neutral point clamped inverter bridge. Figure 3 shows more closely the structure of the boost converter and the inverter bridge. The DC-DC converter means 4' consist of two converter inductors L'con, two converter switches S'_{con}, and two converter diodes D'_{con}. The inverter means 6' consist of twelve inverter switches S'ᵢₙᵥ and six inverter diodes D'ᵢₙᵥ.

The converter assembly according to the invention is not limited to a boost converter and a three-level inverter. In alternative embodiments DC-DC converter means may comprise a different type of converter, such as buck-boost converter, and the inverter means may comprise a two-level inverter or a five-level inverter, for example.

Further, the number of phases of the inverter means is not limited to three. In alternative embodiments the inverter means may comprise a single-phase or a two-phase inverter. In an embodiment with a single-phase or two-phase inverter the inverter means have only two output terminals. There is a neutral point filter capacitor between each output terminal of the inverter means and the neutral point on output side of the inverter means.

It will be obvious to a person skilled in the art that the inventive concept can be implemented in various ways. The invention and its embodiments are not limited to the examples described above but may vary within the scope of the claims.

## Claims

1. A converter assembly comprising DC-DC converter means (4), inverter means (6), a DC link (5), input capacitor means (2), inductor means (7) and a neutral conductor (8), the DC-DC converter means (4) including at least one DC-DC converter unit (41, 42), the DC link (5) electrically connecting an output of the at least one DC-DC converter unit (41, 42) to an input of the inverter means (6), the input capacitor means (2) including an input capacitor unit for each of the at least one DC-DC converter unit (41, 42), each of the input capacitor units being connected between input terminals of corresponding DC-DC converter unit (41, 42) and having a midpoint (21, 22), the neutral conductor (8) being connected to a neutral point (85) on output side of the inverter means (6), and the inductor means (7) comprising an inverter side inductor (Lᵢₙᵥ) between each output terminal of the inverter means (6) and the neutral point (85) on output side of the inverter means (6), **characterized in that** the neutral conductor (8) is connected to the midpoint (21, 22) of each of the input capacitor units.

2. A converter assembly according to claim 1, **characterized in that** each inverter side inductor (Lᵢₙᵥ) is connected in series with a load of the inverter means (6).

3. A converter assembly according to claim 1 or 2, **character-ized in that** there is a neutral point filter capacitor (C_{f}) between each output terminal of the inverter means (6) and the neutral point (85) on output side of the inverter means (6).

4. A converter assembly according to any preceding claim, **char-acterized in that** each of the at least one DC-DC converter unit (41, 42) of the DC-DC converter means (4) has a symmetrical structure in respect of the midpoint of the DC-DC converter unit (41, 42).

5. A converter assembly according to any preceding claim, **char-acterized in that** a modulation sequence of the inverter means (6) is synchronized with a modulation sequence of each of the at least one DC-DC converter unit (41, 42).

6. A converter assembly according to any preceding claim, **char-acterized in that** the at least one DC-DC converter unit (41, 42) is capable of stepping up direct voltage.

7. A converter assembly according to claim 6, **characterized in that** the at least one DC-DC converter unit (41, 42) is also capable of stepping down direct voltage.

8. A power plant comprising power supply means, the power supply means comprising at least one power supply unit having supply terminals, each of the power supply units being adapted to generate a direct current and to feed the direct current out of the power supply unit via the supply terminals, **characterized in that** the power plant comprises a converter assembly according to any one of claims 1 to 7, the supply terminals of each power supply unit being connected to the input terminals of corresponding DC-DC converter unit (41, 42)

9. A power plant according to claim 8, **characterized in that** the power plant is a solar power plant, wherein each power supply unit comprises a photovoltaic cell unit adapted to convert solar energy into direct current.
